# EUROPEAN PATENT SPECIFICATION

(11) **EP 3 082 392 B1**
(45) Date of publication and mention of the grant of the patent: **22.11.2017**
(21) Application number: 13814507.3
(22) Date of filing: 17.12.2013
(51) Int. Cl.: A01C 7/02, A01C 15/02

(54) **ADJUSTMENT MECHANISM FOR VARYING DEGREE OF OPENING OF HOLES IN SPREADER**
EINSTELLMECHANISMUS FÜR UNTERSCHIEDLICHE ÖFFNUNGSGRADE VON LÖCHERN IN EINER VERTEILMASCHINE
MÉCANISME DE RÉGLAGE POUR MODIFIER LE DEGRÉ D'OUVERTURE DES ORIFICES D'UN ÉPANDEUR

(43) Date of publication of application: 26.10.2016
(73) Proprietor: Husqvarna AB, 561 82 Huskvarna (SE)
(72) Inventor: KOHL, Peter, 89257 Illertissen (DE); ARNDT, Wolfgang, 89079 Ulm (DE)
(74) Representative: Finkele, Rolf
(86) International application number: PCT/EP2013/076981
(87) International publication number: WO 2015/090371

(56) References cited:
- DE-U1- 20 219 789
- US-A- 2 892 571
- US-A- 4 027 788
- US-A- 5 617 974

## Description

### TECHNICAL FIELD

The present invention relates to a spreader, and more particularly to an adjustment mechanism for varying a degree of opening of holes in spreader.

### BACKGROUND

Spreaders are push handle type vehicles commonly used for uniformly distributing or spreading a pulverised or granular material such as grains, seeds, fertilizers and the like over a ground, a field, a garden, a lawn, a golf course or other surfaces. A spreader includes a bucket or a hopper for storing a material to be spreaded, and the bucket or the hopper is supported by a pair of wheels to drive or move around the spreader. The bucket includes a plurality of holes provided at a bottom portion of thereof. These holes allow spreading of the material over the ground under the action of gravity, while moving the spreader, and thus uniformly distributing the material over the ground. Generally, spreaders are equipped with an adjustment mechanism to control a rate of discharge or feed rate of the material through the holes.

Traditionally, the adjustment mechanism includes an adjustment element slidably mounted on the bucket and configured to slide over the holes. The sliding movement of the adjustment element may selectively vary a degree of opening of the holes anywhere between a full-open position and a full-closed position. The adjustment mechanism further includes a hand operated lever attached to the adjustment element which is movable with respect to the bucket to slide the adjustment element and vary the degree of opening of the holes. This type of the adjustment mechanism requires a user to bow down every time the degree of opening of the holes is to be changed from a pre-set open position to the closed position to fill or re-fill the bucket with the material. Further, it requires the user to bow down again to move the hand operated lever to slide the adjustment element to vary the degree of opening of the holes to the pre-set open position or some other open position of the holes between the full-open position and the full-closed position. This is a labour intensive process and that can be tiring over a long time. Further, in case the material and/or the spreading requirements on the ground observe no changes, this may also require the user to remember or recall a location of the hand operated lever corresponding to the pre-set open position of the holes.

Some of the specialized spreaders include the adjustment mechanism having a complex arrangement of Bowden cables, biasing means and other engaging components connected to a hand-lever, a hand rail or a bail handle, provided adjacent to a gripping portion of the handle. In this configuration, the hand-lever, the hand rail or the bail handle when released slide the adjustment element to automatically close the holes in the bucket. This type of the adjustment mechanism requires a skilled user to regulate the degree of opening of the holes by applying a pressure on the hand lever. Being pulled from the closed towards a variable opening position by a Bowden cable the adjustment mechanism's end position is not mechanically stabile and could be exceeded by mechanical forces. Also, the manufacturing and maintenance cost associated with this type of the adjustment mechanism is higher.

The spreader described with US 2 892 571 A does provide for a mechanism that allows to position a mechanical element aside the adjustment mechanism. The mechanical element is formed as an adjusting screw with its end defining the end stop limiting the movement of an adjustment element slidable mounted on the spreader's bucket and disposed over the discharge holes to vary its degree of opening. Rotating the adjusting screw within its threaded bearing alters the position of the end stop.

A variable end stop for an adjustment mechanism restricting the movement of an adjustment element is also described with US 4 027 788 A. In this embodiment the end stop is defined by the circumference surface of an eccentric cam member that restricts the movement of a lever moving towards it. Thus buy rotation of the cam member the distance the lever can move freely before engaging with the cam can be adjusted.

Therefore, in light of the foregoing, there is a need for an improved spreader openings adjustment mechanism in a spreader.

### SUMMARY

In view of the above, it is an objective of the present invention to solve or at least reduce the problems discussed above. The objective is achieved by proposing a spreader according to claim 1 and a stopper for such a spreader according to claim 9. A spreader includes a bucket, a handle unit connected to the bucket, a pair of wheels attached to the bucket configured to move the spreader, a plurality of holes disposed at a bottom portion of the bucket. The spreader further includes an adjustment mechanism for controlling a rate of discharge through the holes, wherein the adjustment mechanism includes an adjustment element slidably mounted on the bucket and disposed over the holes, wherein a movement of the adjustment element is configured to selectively vary a degree of opening of the holes between a full-open position and a full-closed position. The adjustment mechanism includes an end stop to create a mechanically insuperable impediment to restrict the movement of the adjustment element towards a full-open position of the holes. The end stop includes a mechanical element configured to shift a position of the impediment to selectively restrict the movement of the adjustment element towards the full-open position of the holes. The end stop is adapted selectively to limit the maximum rate of discharge of the material, such as, fertilizers, or grains, or seeds, and the like, which is critical in agriculture, plantation and gardening/lawn-care applications.

The spreader further includes a lever having a first end and a second end, wherein the lever is pivotally coupled to the bucket between the first end and the second end such that, the second end is coupled to the adjustment element and the first end is configured to move along an adjustment range. The mechanical element is a stopper, wherein the mechanical element is configured to be variably positioned along the adjustment range to limit the movement of the first end of the lever

The adjustment range extends between a full-closed set point and a full-open set point and wherein the stopper is configured to be variably positioned along the adjustment range to limit the movement of the first end of the lever towards the full-open set point.

The stopper includes an attachment portion configured to removably fix the stopper along the adjustment range between the full-closed set point and the full-open set point. Further, the attachment portion includes a toothed profile configured to attach the stopper with the adjustment range.

The stopper further comprises a locking means to interact with the first end of the lever to hold the lever in an intermediate position between the full-closed set point and the full-open set point. Moreover, the locking means comprises a recessed portion.

The lever includes a nose portion configured to mate with the recessed portion of the locking means. Further, the adjustment mechanism includes a foot pedal connected to the lever, wherein the foot pedal is configured to pivotally move the lever. Moreover, the mechanical element is an adjusting screw.

A stopper for a spreader having a bucket, a plurality of holes disposed at a bottom portion of the bucket, and an adjustment mechanism including a lever pivotally coupled to the bucket such that a movement of the lever along an adjustment range move an adjustment element to selectively vary a degree of opening of the holes, wherein the stopper includes an attachment portion configured to variably positioned along the adjustment range to limit the movement of the lever. The attachment portion further includes a toothed profile configured to attach the stopper with the adjustment range.

Further, the stopper includes a locking means configured to lock the stopper with the adjustment range. The stopper includes a grip portion to grip the stopper and dispose it over the adjustment range.

The stoppers may be sold as an accessory in an accessories market for the spreaders. The stoppers have comfort features like an index markings, thus helping to set a particular point in the adjustment range for a desired rate of discharge of the material. The stoppers facilitate the user to not remember the position of the lever during the extended spreading operation. The degree of opening of the holes is different for dispensing, in case of gravels and fertilizers. This degree of opening of the holes for gravels and for fertilizers may not be easy to remember, but with the use of the stoppers the degree of opening of the holes may not be required to be remembered.

### BRIEF DESCRIPTION OF THE DRAWINGS

The invention will be described in more detail with reference to the enclosed drawings, wherein:
FIG. **1** illustrates a perspective view of a spreader, according to an embodiment of the present invention;
FIG. **2** illustrates a detailed view of the adjustment mechanism of FIG. **1**;
FIGS. **3A** to **3J** illustrate an exemplary working of the adjustment mechanism of FIGS. **1** and **2****;**
FIG. **4** illustrates an adjustment mechanism having a stopper, according to another embodiment of the present invention;
FIG. **5** illustrates an adjustment mechanism having a stopper, according to yet another embodiment of the present invention;
FIG. **6** illustrates an adjustment mechanism having a stopper, according to yet another embodiment of the present invention;
FIG. **7** illustrates a spreader, according to another embodiment of the present invention; and
FIG. **8** illustrates a spreader, according to yet another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

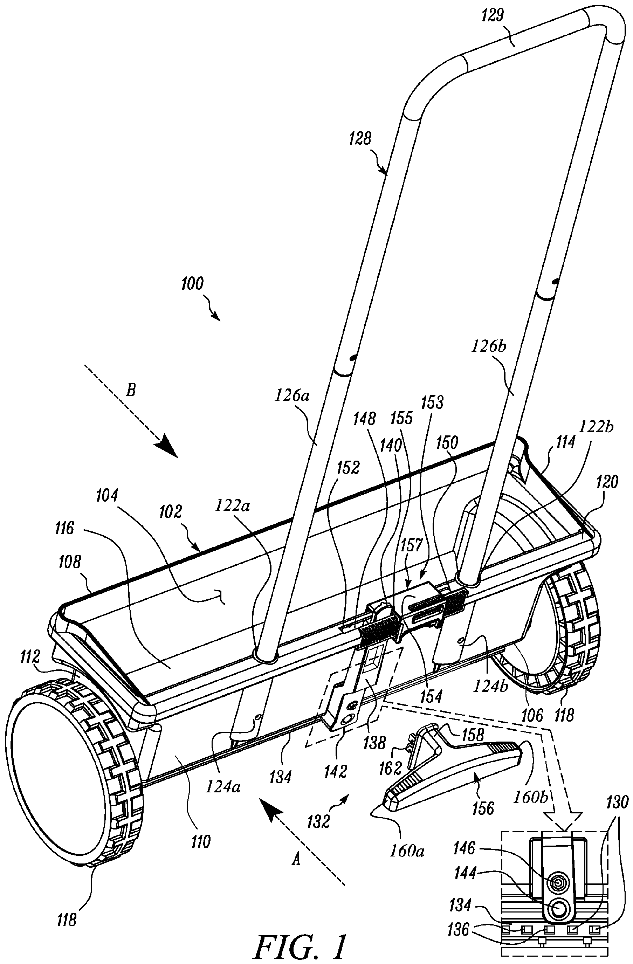

FIG. **1** illustrates a perspective view of a spreader **100,** according to an embodiment of the present invention. The spreader **100,** as illustrated in FIG. **1****,** is a drop-type spreader used for uniformly distributing or spreading a pulverised or granular material such as grains, seeds, fertilizers and the like over a ground, a field, a garden, a lawn, a golf course or other surfaces. In various other embodiments, the spreader **100** may be a broadcast, or rotary, spreader with an impeller blade which throws the material away from the spreader in a wide pattern.

The spreader **100** includes a hopper or a bucket **102** made of plastic, wood, or sheet metal having an open top **104.** The bucket **102** has a substantially rectangular shape having a bottom portion **106** and upstanding longitudinal side walls, front wall **108,** rear wall **110** extending between a first side wall **112** and a second side wall **114** to define a storage cavity **116.** The longitudinal walls **108, 110** and the side walls **112, 114** may be joined together by welding, riveting or integrally formed together by moulding, stamping and bending, to form the bucket **102.** In various other embodiments, the bucket **102** may have an inverted dome shape, a substantially cylindrical shape, or an inverted frusto-conical shape.

As illustrated, the bucket **102** is supported by a pair of wheels **118** and which is configured to move the spreader **100** on the ground. The wheels **118** may be rubber tires or caster wheels disposed on a shaft (not shown) which is received through bearing holes provided on the first and second side walls **112, 114.** In an embodiment, an agitating means may be mounted on the shaft and disposed in the storage cavity **116** to stir or mix or transport the material while spreading.

According to an embodiment of the present invention, the bucket **102** includes a ledge portion **120** transversely extending from the rear wall **110.** The ledge portion **120** includes a pair of openings **122a, 122b** disposed substantially equidistant from the first and second side walls **112, 114,** respectively. The openings **122a, 122b** extend into respective hollow protrusions **124a, 124b** disposed on the rear wall **110** and configured to detachably hold side poles **126a, 126b** of a push-type handle unit **128.** The handle unit **128** further includes a gripping portion **129** interconnecting the side poles **126a, 126b,** which can be gripped by a user to maneuver the spreader **100.** In an embodiment, the side poles **126a, 126b** of the handle unit **128** may be further locked inside the hollow protrusions **124a, 124b** by using locking screws. Alternatively, the hollow protrusions **124a, 124b** may include a snap fit lock to detachably hold the side poles **126a, 126b.** It will be apparent to a person having ordinary skill in the art, the handle unit **128** may be embodied in various forms and designs, including, but not limited to, a T-shape, and a D-shape. Further, the handle unit **128** is detachable when not in use and thus allowing convenience while storing the spreader **100** during packaging and transportation.

The spreader **100** includes a plurality of spaced apart holes **130** (shown in a detailed view in FIG. **1**) disposed at the bottom portion **106** of the bucket **102.** In the illustrated embodiment, the holes **130** have a square cross-section of a pre-determined size to appropriately discharge the granular material such as grains, seeds, fertilizers on the ground. In various other embodiments the holes **130** may have other type of cross-sections, including, but not limited to, a circular, an oval, or a triangular cross-section. The holes **130** may be formed by a stamping and punching operation or formed during a moulding process, and are disposed in an in-line configuration transversely extending between the first side wall **112** and the second side wall **114** with a stipulated spacing. In this embodiment, the pre-determined size of the holes **130** may be based on the design and application area of the spreader **100** and it corresponds to a full-open position of the holes **130** which will allow a maximum rate of discharge or feed rate of the material through the holes **130.** In various alternative embodiments, the holes **130** may be provided along multiple rows (two or more rows) or arranged in a staggered configuration at the bottom portion **106** of the bucket **102.** In case of multiple rows or staggered configuration of the holes **130,** a collective discharge from an entirety of the multiple rows or staggered configuration of the holes **130** corresponds to the full-open position of the holes **130** which allow the maximum rate of discharge of the material through the holes **130.**

According to an embodiment of the present invention, the spreader **100** includes an adjustment mechanism **132** to control a rate of discharge of the material through the holes **130.** The adjustment mechanism **132** includes an adjustment element **134** (shown in the detailed view in FIG. **1**) slidably mounted on the bucket **102.** In an embodiment, the adjustment element **134** may be a strip or a plate disposed over the holes **130** and running lengthwise of the bucket **102** between the first side wall **112** and the second side wall **114.** The adjustment element **134** is configured to slide over the holes **130** while maintaining a smooth contact with an outer surface of the bucket **102.** In an embodiment, the adjustment element **134** may include a plurality of spaced apart cutouts **136.** The cutouts **136** are disposed on the adjustment element **134** in a way such that, the holes **130** at the bottom portion **106** of the bucket **102** and the cutouts **136** in the adjustment element **134** are in a conforming location with regard to a maximum left-ward movement of the adjustment element **134** (viewing form a first direction **A** in FIG. **1**). Further, the holes **130** and the cutouts **136** are in a non-conforming location with regard to a maximum right-ward movement of the adjustment element **134** (viewing form the first direction **A**). Therefore, the maximum left-ward movement and the maximum right-ward movement of the adjustment element **134** correspond to the full-open position and a full-closed position of the holes **130,** respectively. Moreover, a right-ward sliding movement of the adjustment element **134** may selectively vary a degree of opening of the holes **130** from the full-open position to the full-closed position.

In another embodiment, the adjustment element **134** may be a strip or a plate, having a pre-define aspect ratio, disposed over the multiple rows or staggered configuration of the holes **130.** The adjustment element **134** is adapted to cover the entirety of the multiple rows or staggered configuration of the holes **130** which correspond to the full-closed position. Conversely, the movement of the adjustment element **134** uncovers the entirety of the multiple rows or staggered configuration of the holes **130** which correspond to the full-open position. In this embodiment, the sliding movement of the adjustment element **134** may selectively vary the degree of opening of the holes **130** from the full-open position to the full-closed position by successively covering a row or a portion of the multiple rows or the staggered configuration of the holes **130.** In various other embodiments, the adjustment element **134** may have various shapes, including, but not limited to, a curved profile, a round shape, or a square shape, which is largely dependent on the shape of the bucket **102** and/or the arrangement of the holes **130** at the bottom portion **106.**

The adjustment mechanism **132** further includes a lever **138** having a first end **140** and a second end **142.** The lever **138** is attached to the adjustment element **134** at the second end **142** by a pin joint **144.** In an embodiment, the pin joint **144** is provided substantially at a mid-position of the adjustment element **134** and allows a relative motion between the lever **138** and the adjustment element **134.** Alternatively, the pin joint **144** may be provided at any location along a length of the adjustment element **134.** Further, the lever **138** is pivotally coupled to the bucket **102** between the first end **140** and the second end **142** by a pivot joint **146.** The pivot joint **146** being situated in such a manner as to allow any forces resulting from a side-to-side movement of the first end **140** causes the pivot joint **146** to rotate. Thus allowing the forces to be transferred to the adjustment element **134** and impart the sliding movement thereto, in a direction opposite to the side movement of the first end **140.**

According to an embodiment of the present invention, the first end **140** of the lever **138** is configured to move along an adjustment range **148** provided on the bucket **102.** In an embodiment, the adjustment range **148** includes a cutout portion of a pre-determined length disposed on the ledge portion **120** forming guided path such that the first end **140** of the lever **138** is partly received within the guided path. The pre-determined length of the adjustment range **148** is configured to limit the side-to-side movement of the first end **140** of the lever **138** such that the resulted sliding movement imparted to the adjustment element **134** extends between a maximum left-ward movement and a maximum right-ward movement. Accordingly, the adjustment range **148** extends a full-open set point **150** and a full-closed set point **152** of the first end **140** of the lever **138** corresponding to the full-open position and the full-closed position of the holes **130,** respectively. In the illustrated embodiment, the full-open set point **150** and the full-closed set point **152** are substantially located at a rightmost end and a leftmost end on the adjustment range **148** (viewing form the first direction **A**). In an alternative embodiment, the adjustment range **148** may be an unguided path, such that the side-to-side movement of the first end **140** is unconfined along with the sliding movement of the adjustment element **134.**

The adjustment mechanism **132** further includes an end stop **153** adapted to create a mechanically insuperable impediment **155** to restrict the sliding movement of the adjustment element **134** towards the full-open position of the holes **130.** The end stop **153** includes a mechanical element **157.** The mechanical element **157** is configured to shift a position of the impediment **155** to selectively restrict the sliding movement of the adjustment element **134** towards the full-open position of the holes **130.**

In the embodiment illustrated in FIG. **1**, the mechanical element **157** is embodied as a stopper **154** configured to be variably positioned along the adjustment range **148** to limit the side movement of the first end **140** of the lever **138.** As illustrated, the stopper **154** creates the impediment **155** to limit the side movement of the first end **140** of the lever **138** towards the full-open set point **150,** thus restricting the sliding movement of the adjustment element **134** towards the full-open position of the holes **130.** Further, the stopper **154** is configured to shift the position of the impediment **155** along the adjustment range **148,** thus, allowing a selective variation in the degree of opening of the holes **130** based on a position of the stopper **154.** The selective variation in the degree of opening of the holes **130** achieved by variably positioning the stopper **154** along the adjustment range **148** provide an easy, a cost effective, and an error-free control on the maximum rate of discharge of the material.

During operation, the spreading requirements of the material and/or the ground to be spreaded with the material may observe changes, therefore the rate of discharge of the material from the spreader **100** is required to be set accordingly. Particularly, the maximum rate of discharge of the material, such as, fertilizers, or grains, or seeds, and the like, is critical in agriculture, plantation and gardening/lawn-care applications. An accidental excessive discharge of the material not only increases the associated cost, but also degrades the soil quality and/or the health of the plantation. Moreover, sometimes the accidental excessive discharge of the specific fertilizers degrades one or more environmental factors, such as, the ground water quality and severely affects all sorts of living organisms and plantations in the area and the areas nearby thereto. According to an aspect of the present invention, the spreader **100** provided with the end stop **153** embodied as the stopper **154** allows the user to set the degree of opening of the holes **130** as per the changes observed in the spreading requirements of the material and/or the ground to be spreaded with the material, and make possible a successful use of a sole spreader, the spreader **100,** without any additional incurred cost and apprehension of harmful environmental consequences.

Moreover, during an extended spreading operation using a specific material to be spreaded, the user is required to fill or re-fill the storage cavity **116** of the spreader **100** more than a few times. During re-filling of the material in the storage cavity **116,** firstly the first end **140** of the lever **138** is moved to the full-closed set point **152** on the adjustment range **148.** Following the re-filling of the material, the position of the stopper **154** along the adjustment range **148** permits the user to quickly set the degree of opening of the holes **130** with certainty. First, this greatly reduces an overall operational time for the user, so one does not have to recall the degree of opening of the holes **130** which is used during a preceding cycle of the spreading operation. Second, it avoids any unwanted variations in the rate of discharge of the material, which can be primarily caused by forgetfulness, fatigue, tiredness and/or lack of dexterity, during the extended spreading operation.

According to an embodiment of the present invention, the adjustment mechanism **132** may further include a foot pedal **156** attached to the lever **138.** The foot pedal 156 is configured to be actuated by a foot movement of the user to pivotally move the lever **138** about the pivot joint **146.** In an embodiment, the foot pedal **156** may have a T-shape and includes a mounting portion **158,** and a pair of pedal arms **160a, 160b** transversely extending from the mounting portion **158.** The mounting portion **158** has a securing arrangement such as hooks **162** to detachably attach the foot pedal **156** with the lever **138.** In another embodiment, the foot pedal **156** may be integrally formed with the lever **138.** As illustrated in FIG. **1****,** the pedal arms **160a, 160b** may be pressed by the user to selectively move the first end **140** of the lever **138** towards the full-closed set point **152** and the full-open set point **150** on the adjustment range **148,** respectively. This allows the user to control the degree of opening of the holes **130** from a standing position, so one does not have to bow down to move the lever **138.** Moreover, in the illustrated embodiments, the foot pedal **156** and by virtue of the same the lever **138** is position substantially midway with respect to the bucket **102.** Conversely, the lever **138** including the foot pedal **156** may be positioned either leftward or rightward with respect to the bucket **102** to provide an ergonomic position for using the foot pedal **156** either by left foot or right foot of the user. While a preferred embodiment of the foot pedal **156** has been set forth in appended description, the scope of the present invention is not limited thereto, and various other alternative design and shapes of the foot pedal **156** capable of achieving the above function are within the scope of the present invention.

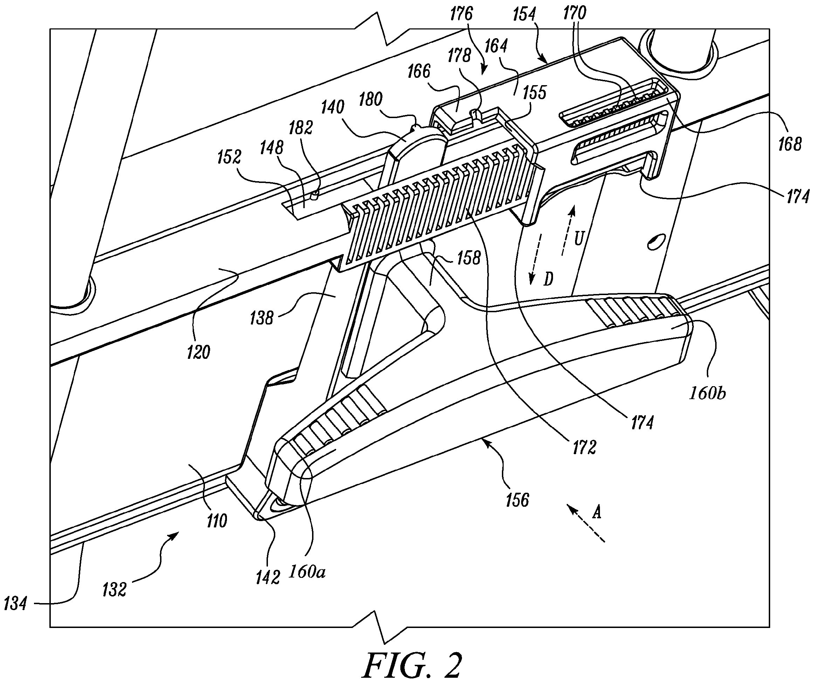

FIG. **2** illustrates a detailed view of the adjustment mechanism **132** of FIG. **1****,** as seen form the first direction **A.** The stopper **154** includes a body portion **164** and an engagement portion **166** integral with body portion **164** and located towards a direction of the full-closed set point **152** on the adjustment range **148.** The body portion **164** adapted to create the impediment **155** to limit the side movement of the first end **140** of the lever **138.** The body portion **164** of the stopper **154** further includes an attachment portion **168** configured to removably fix the stopper **154** along the adjustment range **148.** As illustrated, the stopper **154** is removably fixed at the full-open set point **150** (see FIG.**1**) on the adjustment range **148.** In an embodiment, the attachment portion **168** includes a first toothed profile **170** configured to engage with a complementary second toothed profile **172** provided substantially along the adjustment range **148.** The second toothed profile **172** forms a part of the ledge portion **120** extending from the rear wall **110.** The first and the second toothed profiles **170, 172** may include an array of serrated teeth having a pre-determined pitch or spacing based on a desired gradation required while varying the degree of opening of the holes **130.** The toothed profiles **170** and **172** provide a temporarily fixing of the stopper **154** along the adjustment range **148,** by pressing the stopper **154** in a downward direction **D,** and which can be released by an upward pull, in an upward direction **U.** Moreover, the body portion **164** of the stopper **154** may include a bracket portion **174** to provide a fingers locking type arrangement to avoid a complete separation of the stopper **154** from the bucket **102.** Nevertheless, the bracket portion **174** provide a clearance to lift the stopper **154** in the upward direction **U** to release the temporarily fixing between the toothed profiles **170** and **172,** thus allowing the stopper **154** to selectively positioned along the adjustment range **148.** In this embodiment, the stopper **154** may be factory fitted and assembled while manufacturing the spreader **100** and can be positioned and stored along the adjustment range **148,** without any casual separation or misplacement.

According to an embodiment of the present invention, the engagement portion **166** of the stopper **154** includes a locking means **176** configured to interact with the first end **140** of the lever **138** and selectively hold the lever **138** in an position between the full-open set point **150** and the full-closed set point **152** along the adjustment range **148.** In an embodiment, the locking means **176** includes a recessed portion **178** configured to engage with a nose portion **180** provided on the first end **140** of the lever **138.** The locking means **176** provides a cantilever snap fit connection between the stopper **154** and the first end **140** of the lever **138.** The snap fit connection provides a resilient and robust hold to retain the lever **138** and accordingly prohibits the sliding movement of the adjustment element **134** which otherwise lead to an unwanted variation in the degree of opening of the holes **130.** It will be apparent to a person having ordinary skill in the art, the stopper **154** can be selectively positioned towards the full-open set point **150** on the adjustment range **148** in case of using a relatively large granular size material, such as, pebbles and grains, and conversely the stopper **154** can be selectively positioned towards the full-closed set point **152** in case of using a powdered or dust like material.

According to an embodiment, an end lock **182** may be provided along the adjustment range **148.** The end lock **182** is preferably located adjacent to the full-closed set point **152** on the adjustment range **148.** The end lock **182** may be a protuberance and configured to engage with the nose portion **180** provided on the first end **140** of the lever **138** to removably lock the lever **138** at the full-closed set point **152** during the filling or re-filling of the material in the bucket **102.** In an alternative embodiment, the end lock **182** may be a groove and configured to receive the nose portion **180** to removably lock the lever **138** at the full-closed set point **152.**

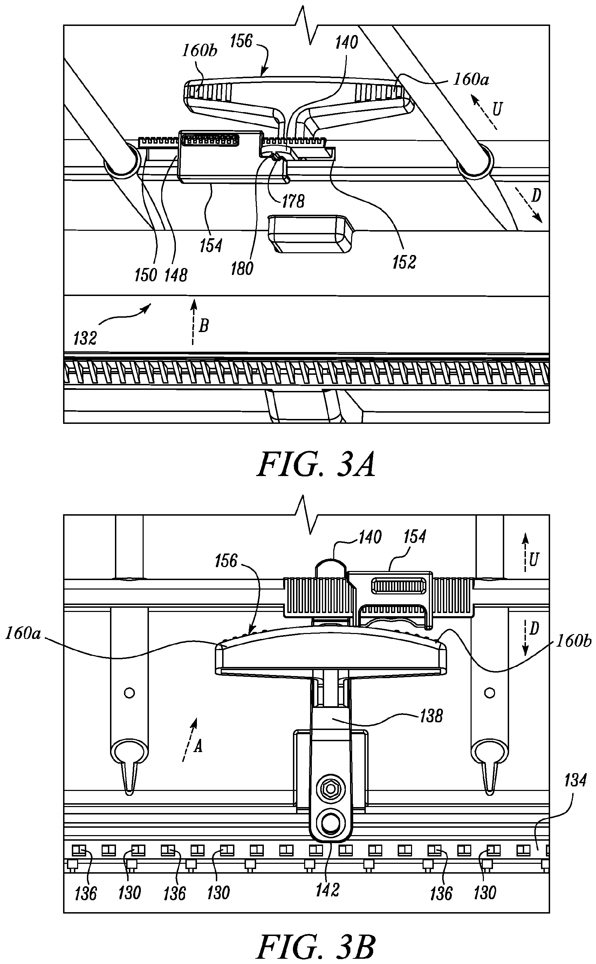

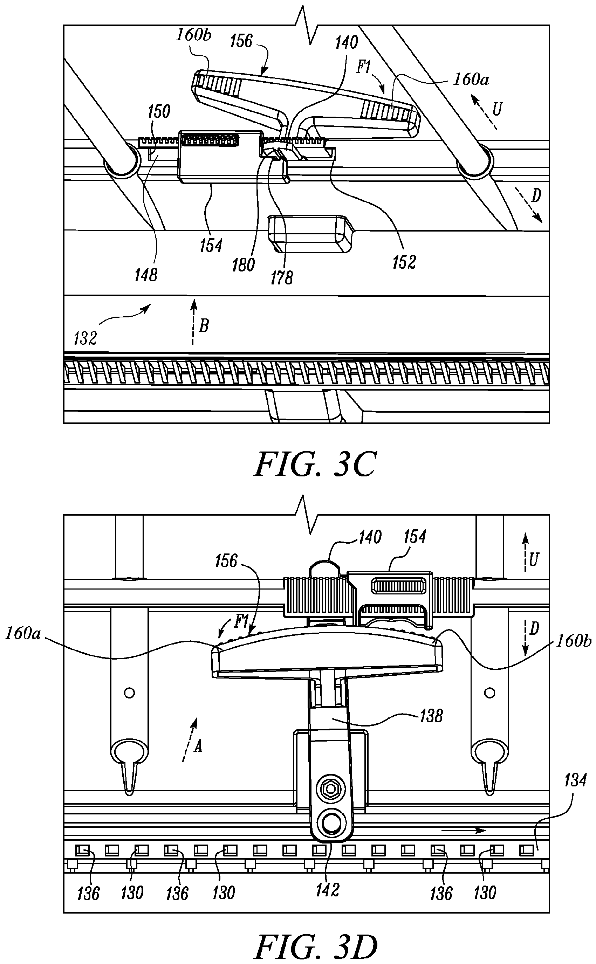

FIGS. **3A** to **3J** illustrate an exemplary working of the adjustment mechanism **132** of FIGS. **1** and **2****.** As illustrated in FIG. **3A****,** as seen from a second direction **B** (also see in FIG. **1**), the stopper **154** is positioned at an intermediate position between the full-open set point **150** and the full-closed set point **152** on the adjustment range **148.** FIG. **3B** is another view of the adjustment mechanism **132** of FIG. **3A****,** as seen from the first direction **A.** Referring to FIGS. **3A** and **3B****,** the intermediate position of the stopper **154** may retain the first end **140** of the lever **138** in a substantially upright orientation, and the degree of opening of the holes **130** is equal to about a half-open position of the holes **130.** Moreover, the foot pedal **156** is in a substantially horizontal orientation. Further, the nose portion **180** on the first end **140** of the lever **138** is engaged with the recessed portion **178** provided on the stopper **154.** Once the user want to fill or re-fill the bucket **102** of the spreader **100,** a first force **F1** is applied on the pedal arm **160a** of the foot pedal **156,** which is illustrated in following FIGS. **3C** and **3D****.**

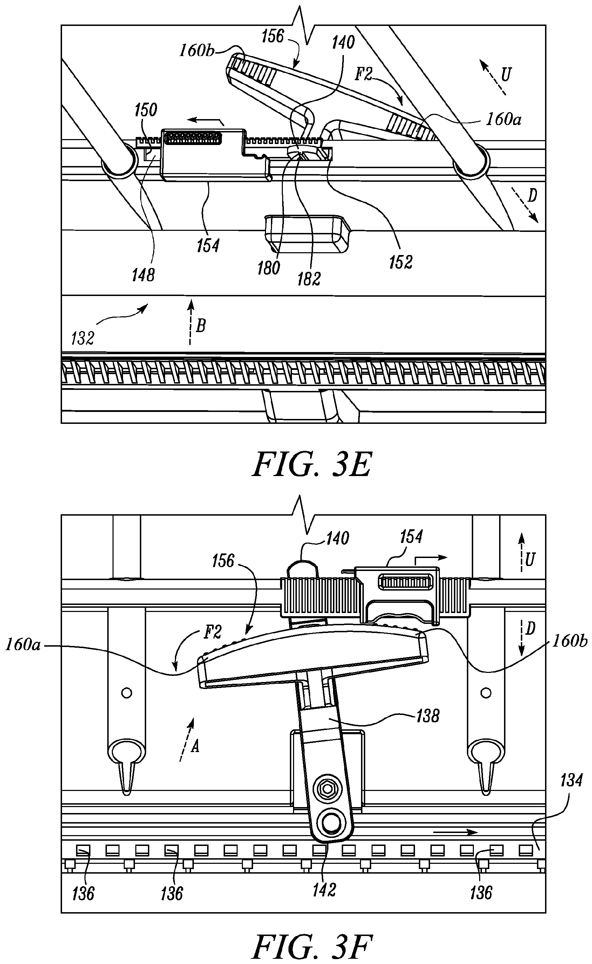

As illustrated in FIG. **3C****,** as seen from the second direction **B,** under the action of the first force **F1,** the first end **140** of the lever **138** may start a movement towards the full-closed set point **152** on the adjustment range **148.** Also, a bending moment applied on the lever **138,** which is generated by the first force **F1** acting of the foot pedal **156,** disengages the snap fit connection to release the nose portion **180** out of the recessed portion **178.** FIG. **3D** is another view of the adjustment mechanism **132** of FIG. **3C****,** as seen from the first direction **A.** Referring to FIGS. **3A** and **3B****,** under the action of the first force **F1,** the adjustment element **134** starts the sliding movement towards the full-closed position of the holes **130** (shown by an arrow), thus reducing the degree of opening of the holes **130** below the half-open position of the holes **130.** Following this, the magnitude of force acting on the pedal arm **160a** of the foot pedal **156** is increased to a second force **F2** from the first force **F1** to fully move the lever **138** to the full-closed set point **152** on the adjustment range **148,** which is illustrated in FIGS. **3E** and **3F****.**

As illustrated in FIG. **3E****,** as seen from the second direction **B,** under the action of the second force **F2,** the first end **140** of the lever **138** overpass the end lock **182** provided on the adjustment range **148,** and the end lock **182** engages with the nose portion **180.** Thus, locking the lever **138** at the full-closed set point **152** and allowing filling or re-filling of the material in the bucket **102.** FIG. **3F** is another view of the adjustment mechanism **132** of FIG. **3E****,** as seen from the first direction **A.** Referring to FIGS. **3E** and **3F****,** the cutouts **136** on the adjustment element **134** move to the non-conforming location with the holes **130** at the bottom portion **106** of the bucket **102** corresponding to the full-closed position of the holes **130.** In an alternative embodiment, the lever **138** may be spring biased towards the full-closed set point **152.** In this case a user has to apply less effort to move the lever **138** to the full-closed set point **152** on the adjustment range **148.**

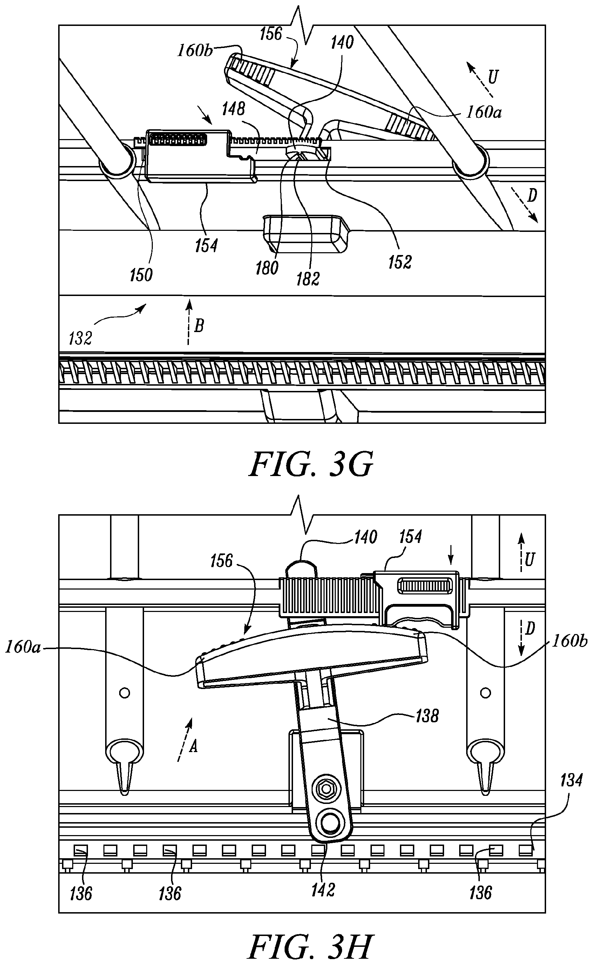

Moreover, as illustrated in FIGS. **3E** and **3F****,** the stopper **154** is lifted upward, along the upward direction **U,** and moved towards the full-open set point **150** on the adjustment range **148.** This varies the degree of opening of the holes **130** in accordance with a new desired rate of discharge of the material. It will be apparent to a person having ordinary skill in the art, the movement of the stopper **154** can be done either towards the full-open set point **150** or the full-closed set point **152,** which is on the complete discretion of the user and primarily based on the changes observe in the material to be spreaded or the ground to be spreaded with. Following this, the stopper **154** is positioned along the adjustment range **148** at a location in accordance with the new desired rate of discharge of the material, by pressing the stopper **154** in the downward direction **D,** which is illustrated in FIGS. **3G** and **3H****.** As illustrated in FIGS. **3G** and **3H****,** as seen from the second direction **B** and the first direction **A,** respectively, the stopper **154** is positioned at the full-open set point **150** on the adjustment range **148.**

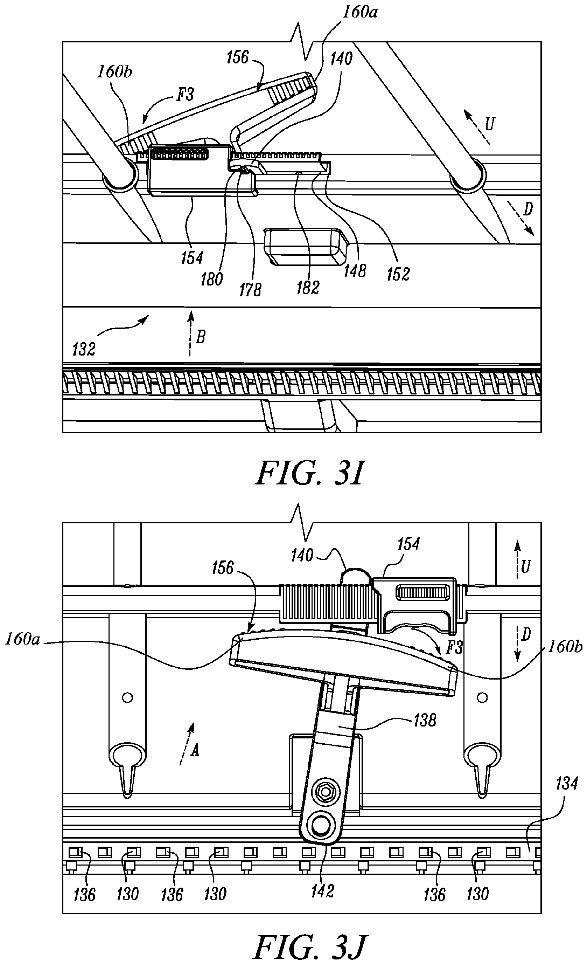

Lastly, a third force **F3** is applied on the pedal arm **160b** of the foot pedal **156,** which is illustrated in FIGS. **3I** and **3J****.** As illustrated in FIG. **3I****,** as seen from the second direction **B,** under the action of the third force **F3,** the first end **140** of the lever **138** moves towards the full-open set point **150** on the adjustment range **148.** Also, a bending moment applied on the lever **138,** generated during the application of the third force **F3,** disengages the snap fit connection to release the nose portion **180** overpassing the end lock **182.** Also, the nose portion **180** engages with the recessed portion **178** of the stopper **154,** thus locking the first end **140** of the lever **138** at the full-open set point **150** on the adjustment range **148.** FIG. **3J** is another view of the adjustment mechanism **132** of FIG. **3I****,** as seen from the first direction **A.** Referring to FIGS. **3I** and **3J****,** the adjustment element **134** move to the conforming location with the holes **130** at the bottom portion **106** of the bucket **102** corresponding to the full-open position of the holes **130.**

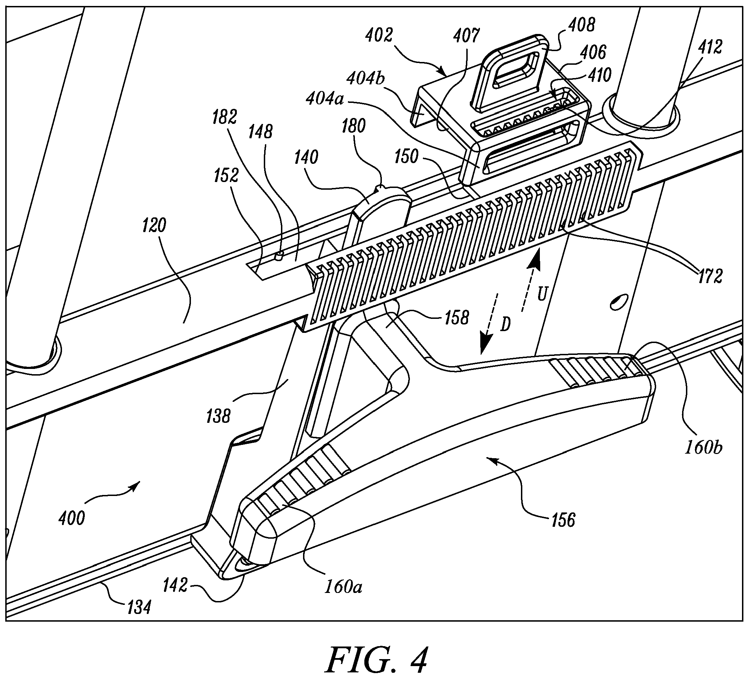

FIG. **4** illustrates an adjustment mechanism **400** having a stopper **402,** according to another embodiment of the present invention. The stopper **402** may have an inverted clamp-like shape with two side walls **404a** and **404b** extending form an upper wall **406.** The upper wall **406** adapted to create an impediment **407** to limit the side movement of the first end **140** of the lever **138.** The upper wall **406** may further include a grip portion **408** to facilitate the upward movement, along the upward direction **U,** and the downward movement, along the downward direction **D,** of the stopper **402.** In an embodiment, the upper wall **406** includes an attachment portion **410** having a first toothed profile **412** configured to engage with the second toothed profile **172** provided substantially along the adjustment range **148.** The engagement between the attachment portion **410** having toothed profiles **412** and the complementary second toothed profile **172** facilitates the temporarily fixing of the stopper **402** along the adjustment range **148,** by pressing the stopper **402** in the downward direction **D.**

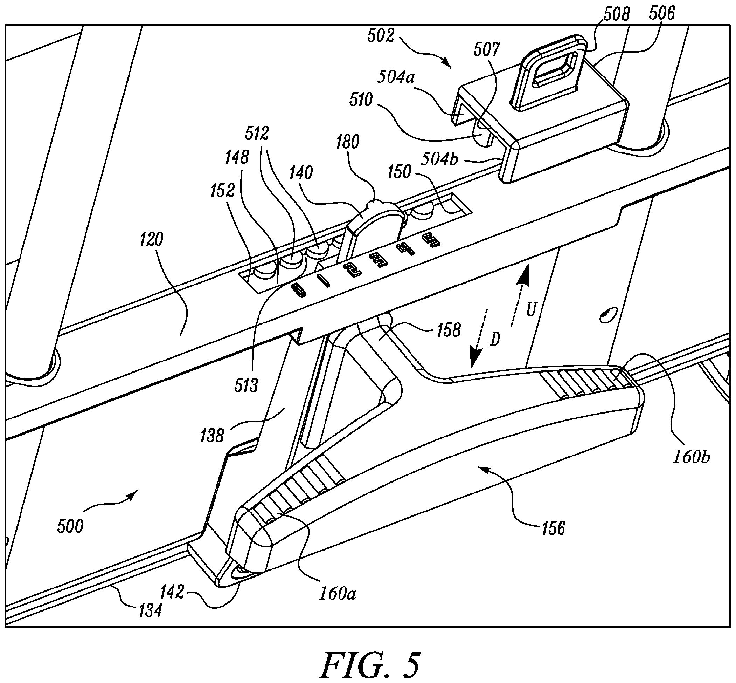

FIG. **5** illustrates an adjustment mechanism **500** having a stopper **502,** according to yet another embodiment of the present invention. The stopper **502** may also have an inverted clamp-like shape with two side walls **504a** and **504b** extending form an upper wall **506.** The upper wall **506** adapted to create the impediment **507** to limit the side movement of the first end **140** of the lever **138.** The upper wall **506** may further include a grip portion **508** to facilitate the upward movement, along the upward direction **U,** and the downward movement, along the downward direction **D,** of the stopper **502.** In an embodiment, the adjustment range **148** includes multiple tooth elements **512** disposed with a stipulated spacing **513** therebetween. The nose portion **180** provided on the first end **140** of the lever **138** is configured to be received within spacing **513** between the tooth elements **512.**

In an embodiment, the upper wall **506** includes a snap element **510** configured to be received within the spacing **513** between the adjacent tooth elements **512** and provide a snap fit locking. The snap fit locking between the snap element **510** and the tooth elements **512** facilitates the temporarily fixing of the stopper **502** along the adjustment range **148,** by pressing the stopper **502** in the downward direction **D.** Moreover, the ledge portion **120** of the bucket **102** may include index markings (e.g. 0, 1, 2, 3, 4 and 5) along the adjustment range **148.** The index markings facilitate to recall the positioning of the first end **140** of the lever **138** during the spreading operation.

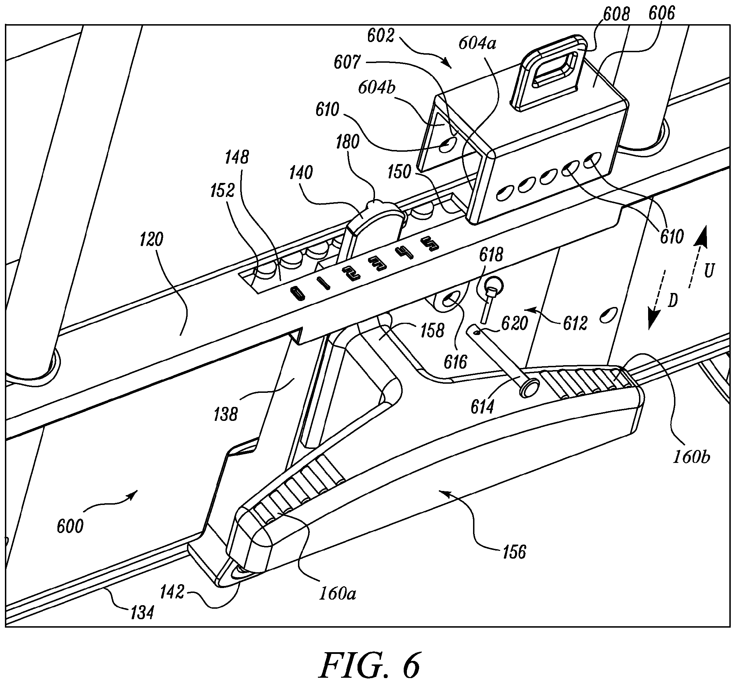

FIG. **6** illustrates an adjustment mechanism **600** having a stopper **602,** according to yet another embodiment of the present invention. The stopper **602** may also have an inverted clamp-like shape with two side walls **604a** and **604b** extending form an upper wall **606.** The upper wall **606** adapted to create the impediment **607** to limit the side movement of the first end **140** of the lever **138.** The upper wall **606** may further include a grip portion **608** to facilitate the upward movement, along the upward direction **U,** and the downward movement, along the downward direction **D,** of the stopper **602.** In an embodiment, the stopper **602** includes a plurality of first aligned holes **610** disposed on the side walls **604a** and **604b,** and the locking arrangement **612** is provides to temporarily fix the stopper **602** along the adjustment range **148.** The locking arrangement **612,** includes a second through hole **616** provided on the adjustment range **148.** The stopper **602** is disposed on the adjustment range **148,** wherein one of the first aligned holes **610** conforms with the second through hole **616** according to a set positioning of the stopper **602.** The locking arrangement **612** further includes a fastener **614** passes through the holes **610, 616** and temporarily fix the stopper **602.** Moreover, a lock pin **618** is provided to pass through a locking hole **620** on the fastener **614** to safely lock the stopper **602** along the adjustment range **148.** Moreover, in this embodiment, the ledge portion **120** of the bucket **102** may also include index markings (e.g. 0, 1, 2, 3, 4 and 5) along the adjustment range **148.** The index markings facilitate to recall the positioning of the first end **140** of the lever **138** during the spreading operation.

The various details of the adjustment mechanisms **132, 400, 500, 600** having the stoppers **154, 402, 502, 602,** as illustrated in the FIGS. **1-****3, 4, 5** and **6,** are purely exemplary in nature, and the stoppers **402, 502, 602** and the adjustment mechanisms **400, 500, 600** may be of any other design within the scope of the present invention. Further, the stoppers **402, 502, 602** may be sold as an accessory in an accessories market for the spreaders. The stoppers **402, 502, 602** have comfort features like an index markings, thus helping to set a particular point in the adjusment range **148** for a desired rate of discharge of the material. The stoppers **154, 402, 502, 602** facilitate the user to not remember the position of the lever **138** during the extended spreading operation. The degree of opening of the holes **130** is different for dispensing, in case of gravels and fertilizers. These degree of opening of the holes **130** for gravels and for fertilizers may not be easy to remember, but with the use of the stoppers **154, 402, 502, 602** the degree of opening of the holes **130** may not be required to be remembered.

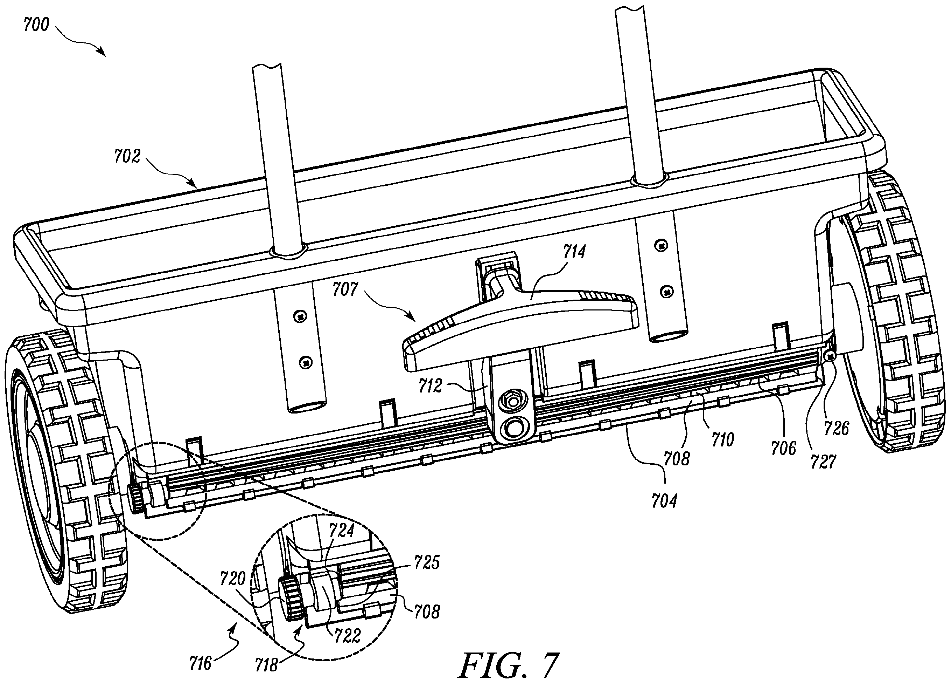

FIG. **7** illustrates a spreader **700,** according to another embodiment of the present invention. The spreader **700** includes a bucket **702** having a bottom portion **704** and a plurality of material discharging holes **706** are provided at the bottom portion **704.** As described above, an adjustment mechanism **707** is provided to vary the degree of opening of the holes **706** between the full-open position and the full-closed position. The adjustment mechanism **707** includes an adjustment element **708,** embodied as a strip or plate, provided to slide over the holes **706** and having a plurality of spaced apart cutouts **710.** Thus, a sliding movement of adjustment element **708** selective vary the degree of opening of the holes **706** between the full-open position and the full-closed position. Moverove, the adjustment mechanism **707** includes a lever **712** and a foot pedal **714** operatively connected to the adjustment element **708.** According to an embodiment, the adjustment mechanism **707** includes an end stop **716** adapted to create a mechanically insuperable impediment **724** to restrict the sliding movement of the adjustment element **708** towards the full-open position of the holes **706.** The end stop **716** may include a mechanical element **718** embodied as an adjusting screw **720.** The adjusting screw **720** is configured to shift a position of the impediment **724** to selectively restrict the sliding movement of the adjustment element **708** towards the full-open position of the holes **706.** The adjusting screw **720** may be a threaded bolt and supported on an internally threaded flange **722** rigidly coupled to the bucket **702** at the bottom portion **704.** In this embodiment, the impediment **724** created by the adjusting screw **720** is configure to abut with an end portion **725** of the adjustment element **708.** Moreover, a stopping screw **726** is provided adjacent to another end portion **727** of the adjustment element **708** to define a limit for the full-closed position of the holes **706.**

Further, in case of a spreader having a complex arrangement of adjustment mechanism consisting of Bowden cables, biasing means and other engaging components connected to a hand-lever, a hand rail or a bail handle, provided adjacent to a gripping portion. In this configuration, the hand-lever, the hand rail or the bail handle when released slide an adjustment element to automatically close the holes. This type of the adjustment mechanism requires a skilled user to regulate the degree of opening of the holes by applying a pressure on the hand lever. However, by use of the adjusting screw **720** the maximum rate of discharge of the material through the holes **706** is limited, and allows an user with less dexterity to easily control the degree of opening of the holes **706** using the hand-lever, the hand rail or the bail handle.

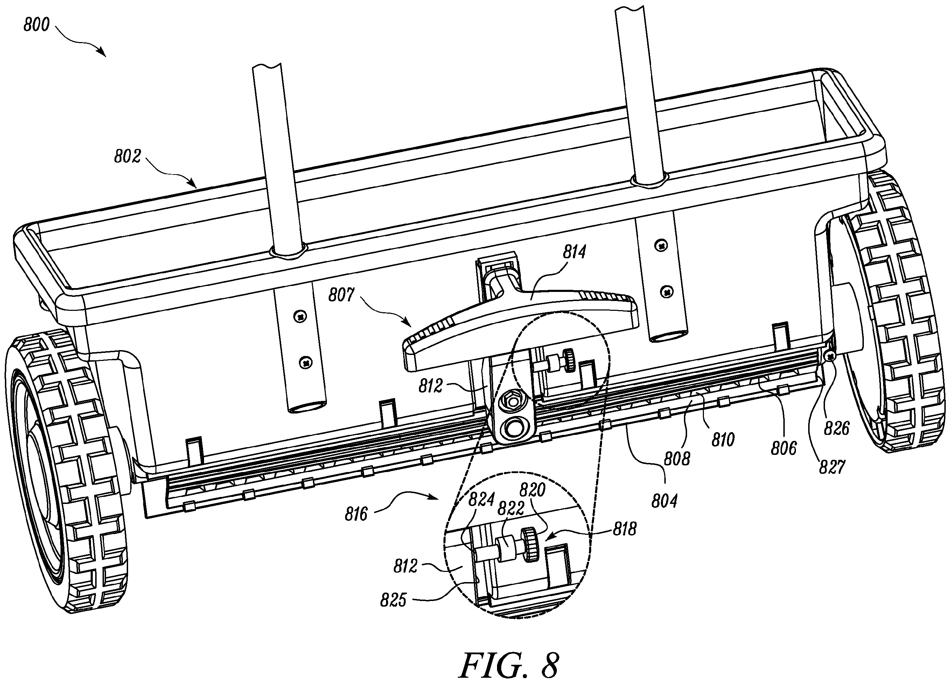

FIG. **8** illustrates a spreader **800,** according to yet another embodiment of the present invention. The spreader **800** includes a bucket **802** having a bottom portion **804** and a plurality of material discharging holes **806** are provided at the bottom portion **804.** An adjustment mechanism **807** is provided to vary the degree of opening of the holes **806** between the full-open position and the full-closed position. The adjustment mechanism **807** includes an adjustment element **808,** embodied as a strip or plate, provided to slide over the holes **806** and having a plurality of spaced apart cutouts **810.** Thus, a sliding movement of adjustment element **808** selective vary the degree of opening of the holes **806** between the full-open position and the full-closed position. Moverove, the adjustment mechanism **807** includes a lever **812** and a foot pedal **814** operatively connected to the adjustment element **808.** According to an embodiment, the adjustment mechanism **807** includes an end stop **816** adapted to create a mechanically insuperable impediment **824** to restrict a pivotal movement of the lever **812** and thus restricting the sliding movement of the adjustment element **808** towards the full-open position of the holes **806.** The end stop **816** may include a mechanical element **818** embodied as an adjusting screw **820.** The adjusting screw **820** is configured to shift a position of the impediment **824** to selectively restrict the sliding movement of the adjustment element **808** towards the full-open position of the holes **806.** The adjusting screw **820** may be a threaded bolt and supported on an internally threaded flange **822** rigidly coupled to the bucket **802** adjacent to the lever **812.** In this embodiment, the impediment **824** created by the adjusting screw **820** is configure to abut with an end face **825** of the lever **812.** Moreover, a stopping screw **826** is provided adjacent to an end portion **827** of the adjustment element **808** to define a limit for the full-closed position of the holes **806.**

The embodiments of the end stops **716, 816** described as the adjusting screws **720, 820** are exemplary in nature. In alternative embodiments, the end stops **716, 816** may include an eccentric or a cam-member to selectively shift the impediments **724, 824** to restrict the sliding movement of the adjustment elements **708, 808** towards the full-open position of the holes **706, 806.**

While FIG. **7** and **FIG. 8** show the mechanical elements **718, 818** being rigidly coupled to the bucket **702, 802** it is obvious that these mechanical elements **718, 818** could in an alternative embodiment be rigidly coupled to the lever **712** or the adjustment element **708, 808.** In this case these mechanical elements **718, 818** will abut against an end face of an element that is connected or formed on the bucket **702, 802.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### PARTS LIST:

- 100: spreader
- 102: bucket
- 104: open top
- 106: bottom portion
- 108: front wall
- 110: rear wall
- 112: first side wall
- 114: second side wall
- 116: storage cavity
- 118: wheels
- 120: ledge portion
- 122a, 122b: pair of openings
- 124a, 124b: hollow protrusions
- 126a, 126b: side poles
- 128: handle unit
- 129: gripping portion
- 130: holes
- 132: adjustment mechanism
- 134: adjustment element
- 136: cutouts
- 138: lever
- 140: first end
- 142: second end
- 144: pin joint
- 146: pivot joint
- 148: adjustment range
- 150: full-open set point
- 152: full-closed set point
- 153: end stop
- 154: stopper
- 155: impediment
- 156: foot pedal
- 157: mechanical element
- 158: mounting portion
- 160a, 160b: pedal arms
- 162: hooks
- 164: body portion
- 166: engagement portion
- 168: attachment portion
- 170: toothed profile
- 172: toothed profile
- 174: bracket portion
- 176: locking means
- 178: recessed portion
- 180: nose portion
- 182: end lock
- 400: adjustment mechanism
- 402: stopper
- 404a: side wall
- 404b: side wall
- 406: upper wall
- 407: impediment
- 408: grip portion
- 410: attachment portion
- 412: first toothed profile
- 500: adjustment mechanism
- 502: stopper
- 504a: side wall
- 504b: side wall
- 506: upper wall
- 507: impediment
- 508: grip portion
- 510: snap element
- 512: tooth elements
- 513: spacing between tooth elements
- 600: adjustment mechanism
- 602: stopper
- 604a: side wall
- 604b: side wall
- 606: upper wall
- 607: impediment
- 608: grip portion
- 610: first aligned holes
- 612: locking arrangement
- 614: fastener
- 616: second through hole
- 618: lock pin
- 620: locking hole
- 700: spreader
- 702: bucket
- 704: bottom portion
- 706: holes
- 707: adjustment mechanism
- 708: adjustment element
- 710: cutouts
- 712: lever
- 714: foot pedal
- 716: end stop
- 724: impediment
- 718: mechanical element
- 720: adjusting screw
- 722: internally threaded flange
- 725: end portion of adjustment element
- 726: stopping screw
- 727: end portion of adjustment element
- 800: spreader
- 802: bucket
- 804: bottom portion
- 806: holes
- 807: adjustment mechanism
- 808: adjustment element
- 810: cutouts
- 812: lever
- 814: foot pedal
- 816: end stop
- 824: impediment
- 818: mechanical element
- 820: adjusting screw
- 822: internally threaded flange
- 825: end face of lever
- 826: stopping screw
- 827: end portion of adjustment element
- A: first direction
- B: second direction
- U: upward direction
- D: downward direction

## Claims

1. A spreader **(100, 700, 800)** comprising:
a bucket **(102, 702, 802);**
a handle unit **(128)** connected to the bucket;
a pair of wheels **(118)** attached to the bucket, wherein the pair of wheels is configured to move the spreader;
a plurality of holes **(130, 706, 806)** disposed at a bottom portion of the bucket; and
an adjustment mechanism **(132, 707, 807)** for controlling a rate of discharge through the holes **(130, 706, 806),** the adjustment mechanism **(132, 707, 807)** comprising:
an adjustment element **(134, 708, 808)** slidably mounted on the bucket **(102)** and disposed over the holes **(130, 706, 806),** wherein a movement of the adjustment element **(134, 708, 808)** is configured to selectively vary a degree of opening of the holes **(130, 706, 806)** between a full-open position and a full-closed position; and
an end stop **(153, 716, 816)** configured to create a mechanically insuperable impediment **(155, 407, 507, 607, 724, 824)** to restrict the movement of the adjustment element **(134, 708, 808)** towards the full-open position of the holes **(130, 706, 806),**
wherein the end stop **(153)** comprises a mechanical element **(157, 718, 818)** configured to shift a position of the impediment **(155, 407, 507, 607, 724, 824)** to selectively restrict the movement of the adjustment element **(134, 708, 808)** towards the full-open position of the holes **(130, 706, 806)** And
wherein the spreader further comprises a lever **(138)** having a first end **(140)** and a second end **(142),** wherein the lever **(138)** is pivotally coupled to the bucket **(102)** between the first end and the second end such that, the second end is coupled to the adjustment element **(134)** and the first end is configured to move along an adjustment range **(148),**
**characterized in that**
the mechanical element **(157)** is a stopper **(154, 402, 502, 602)** configured to be variably positioned along the adjustment range **(148)** to limit the movement of the first end of the lever **(138),**
wherein the adjustment range **(148)** extends between a full-closed set point **(152)** and a full-open set point **(150)** and wherein the stopper **(154, 402, 502, 602)** limits the movement of the first end of the lever **(138)** towards the full-open set point **(150)** and,
wherein the stopper **(154, 402, 502, 602)** comprises an attachment portion **(168)** configured to removably fix the stopper **(154, 402, 502, 602)** along the adjustment range **(148)** between the full-closed set point **(152)** and the full-open set point **(150).**

2. The spreader according to claim 2, wherein the attachment portion **(168)** comprises a toothed profile **(170)** configured to attach the stopper with the adjustment range.

3. The spreader according to claim 1, wherein the attachment portion **(168)** comprises an upper wall **(506)** including a snap element **(510)** configured to be received within the spacing between adjacent tooth elements **(512)** arranged within the adjustment range **(148)** providing a snap fit locking facilitating a temporarily fixing of the stopper **(502).**

4. The spreader according to claim 1, wherein the attachment portion **(168)** comprises a plurality of first aligned holes **(610)** disposed on the side walls **(604a, 604b)** to be aligned with a second through hole **(616)** provided on the adjustment range **(148)** to allow a fastener **(614)** to pass through the holes **(610, 616)** to temporarily fix the stopper **(602).**

5. The spreader according to claims 1 or 2, wherein the stopper **(154, 402, 502, 602)** comprises a locking means **(176)** to interact with the first end of the lever **(138)** to hold the lever **(138)** in an intermediate position between the full-closed set point **(152)** and the full-open set point **(150).**

6. The spreader according to claim 5, wherein the locking means **(176)** comprises a recessed portion **(178).**

7. The spreader according to claim 6, wherein the lever **(138)** comprises a nose portion **(180)** configured to mate with the recessed portion **(178)** of the locking means **(176).**

8. The spreader according to claim 1, wherein the adjustment mechanism **(132)** further comprises a foot pedal **(156)** connected to the lever **(138),** the foot pedal **(156)** is configured to pivotally move the lever **(138).**

9. A stopper (154, 402, 502, 602) for a spreader according to claim 1,
**characterized in that**
the stopper **(154, 402, 502, 602)** comprises an attachment portion **(168)** configured to variably position and removably fix the stopper **(154, 402, 502, 602)** along the adjustment range to limit the movement of the lever, the stopper (154, 402, 502, 602) comprising index markings for helping to set a particular point in the adjustment range for a desired rate of discharge of the material.

10. The stopper according to claim 9, wherein the attachment portion **(168)** comprises a toothed profile **(170)** configured to attach the stopper **(154, 402, 502, 602)** with the adjustment range.

11. The stopper according to claim 9, wherein the attachment portion **(168)** comprises an upper wall **(506)** including a snap element **(510)** configured to be received within the spacing between adjacent tooth elements **(512)** arranged within the adjustment range **(148)** providing a snap fit locking facilitating a temporarily fixing of the stopper **(502).**

12. The stopper according to claim 9, wherein the attachment portion **(168)** comprises a plurality of first aligned holes **(610)** disposed on the side walls **(604a, 604b)** to be aligned with a second through hole **(616)** provided on the adjustment range **(148)** to allow a fastener **(614)** to pass through the holes **(610, 616)** to temporarily fix the stopper **(602).**

13. The stopper according to claim 9, wherein the stopper **(154, 402, 502, 602)** comprises a locking means **(176)** configured to lock the stopper **(154, 402, 502, 602)** with the adjustment range.

14. The stopper according to claim 9, wherein the stopper **(154, 402, 502, 602)** comprises a grip portion **(408, 508, 608)** to grip the stopper **(154, 402, 502, 602)** and dispose it over the adjustment range.

## Patentansprüche

1. Verteilmaschine (100, 700, 800) umfassend:
einen Behälter (102, 702, 802);
eine Griffeinheit (128), die mit dem Behälter verbunden ist;
ein Paar Räder (118), die an dem Behälter befestigt sind, wobei das Paar Räder eingerichtet ist, um die Verteilmaschine zu bewegen;
eine Vielzahl von Löchern (130, 706, 806), die an einem Bodenabschnitt des Behälters angeordnet sind; und
einen Einstellmechanismus (132, 707, 807) zum Steuern einer Entladungsrate durch die Löcher (130, 706, 806), wobei der Einstellmechanismus (132, 707, 807) umfasst:
ein an dem Behälter (102) verschiebbar befestigtes und über den Löchern (130, 706, 806) angeordnetes Einstellelement (134, 708, 808), wobei eine Bewegung des Einstellelementes (134, 708, 808) eingerichtet ist, um selektiv einen Öffnungsgrad der Löcher (130, 706, 806) zwischen einer vollständig geöffneten Position und einer vollständig geschlossenen Position zu variieren; und
einen Endanschlag (153, 716, 816), der so eingerichtet ist, dass er ein mechanisch unüberwindbares Hindernis (155, 407, 507, 607, 724, 824) erzeugt, um die Bewegung des Einstellelements (134, 708, 808) in Richtung der vollständig geöffneten Position der Löcher (130, 706, 806) zu begrenzen,
wobei der Endanschlag (153) ein mechanisches Element (157, 718, 818) umfasst, das so eingerichtet ist, dass es eine Position des Hindernisses (155, 407, 507, 607, 724, 824) verschiebt, um die Bewegung des Einstellelements (134, 708, 808) in Richtung der vollständig geöffneten Position der Löcher (130, 706, 806) selektiv zu beschränken, und
wobei die Verteilmaschine zudem einen Hebel (138) mit einem ersten Ende (140) und einem zweiten Ende (142) umfasst, wobei der Hebel (138) schwenkbar mit dem Behälter (102) zwischen dem ersten Ende und dem zweiten Ende gekoppelt ist, so dass das zweite Ende mit dem Einstellelement (134) gekoppelt ist und das erste Ende so eingerichtet ist, dass es sich entlang eines Einstellbereichs (148) bewegt,
**dadurch gekennzeichnet, dass**
das mechanische Element (157) ein Stopper (154, 402, 502, 602) ist, der so eingerichtet ist, dass er variabel entlang des Einstellbereichs (148) positioniert ist, um die Bewegung des ersten Endes des Hebels (138) zu begrenzen,
wobei der Einstellbereich (148) zwischen einem vollständig geschlossenen Sollwert (152) und einem vollständig geöffneten Sollwert (150) verläuft und wobei der Stopper (154, 402, 502, 602) die Bewegung des ersten Endes des Hebels (138) in Richtung des vollständig geöffneten Sollwerts (150) begrenzt und,
wobei der Stopper (154, 402, 502, 602) einen Befestigungsabschnitt (168) umfasst, der eingerichtet ist, um den Stopper (154, 402, 502, 602) entlang des Einstellbereichs (148) zwischen dem vollständig geschlossenen Sollwert (152) und dem vollständig geöffneten Sollwert (150) ablösbar zu fixieren.

2. Verteilmaschine nach Anspruch 2, wobei der Befestigungsabschnitt (168) ein gezahntes Profil (170) aufweist, das eingerichtet ist, um den Stopper mit dem Einstellbereich zu befestigen.

3. Verteilmaschine nach Anspruch 1, wobei der Befestigungsabschnitt (168) eine obere Wand (506) umfasst, die ein Schnappelement (510) mit einschließt, das so eingerichtet ist, dass es in dem Abstand zwischen benachbarten Zahnelementen (512), die in dem Einstellbereich (148) angeordnet sind, aufgenommen wird und eine Schnappverschlussverriegelung bereitstellt, die eine vorübergehende Fixierung des Stoppers (502) erleichtert.

4. Verteilmaschine nach Anspruch 1, wobei der Befestigungsabschnitt (168) eine Vielzahl von ersten ausgerichteten Löchern (610) umfasst, die an den Seitenwänden (604a, 604b) angeordnet sind, um auf ein zweites, auf dem Einstellbereich (148) vorgesehenes Durchgangsloch (616) ausgerichtet zu sein, um es einem Befestigungselement (614) zu ermöglichen, durch die Löcher (610, 616) hindurchzugehen, um den Stopper (602) vorübergehend zu fixieren.

5. Verteilmaschine nach Anspruch 1 oder 2, wobei der Stopper (154, 402, 502, 602) eine Verriegelungseinrichtung (176) umfasst, die mit dem ersten Ende des Hebels (138) zusammenwirkt, um den Hebel (138) in einer Zwischenposition zwischen dem vollständig geschlossenen Sollwert (152) und dem vollständig geöffneten Sollwert (150) zu halten.

6. Verteilmaschine nach Anspruch 5, wobei die Verriegelungseinrichtung (176) einen vertieften Abschnitt (178) umfasst.

7. Verteilmaschine nach Anspruch 6, wobei der Hebel (138) einen Nasenabschnitt (180) aufweist, der so eingerichtet ist, dass er mit dem vertieften Abschnitt (178) der Verriegelungseinrichtung (176) zusammenpasst.

8. Verteilmaschine nach Anspruch 1, wobei der Einstellmechanismus (132) zudem ein mit dem Hebel (138) verbundenes Fußpedal (156) umfasst, wobei das Fußpedal (156) eingerichtet ist, um den Hebel (138) schwenkbar zu bewegen.

9. Stopper (154, 402, 502, 602) für eine Verteilmaschine gemäß Anspruch 1,
**dadurch gekennzeichnet, dass**
der Stopper (154, 402, 502, 602) einen Befestigungsabschnitt (168) umfasst, der eingerichtet ist, um den Stopper (154, 402, 502, 602) entlang des Einstellbereichs variabel zu positionieren und ablösbar zu fixieren, um die Bewegung des Hebels zu begrenzen, wobei der Stopper (154, 402, 502, 602) Indexmarkierungen umfasst, die helfen, um eine bestimmte Position in dem Einstellbereich für eine gewünschte Entladungsrate des Materials einzustellen.

10. Stopper nach Anspruch 9, wobei der Befestigungsabschnitt (168) ein gezahntes Profil (170) umfasst, das eingerichtet ist, um den Stopper (154, 402, 502, 602) mit dem Einstellbereich zu befestigen.

11. Stopper nach Anspruch 9, wobei der Befestigungsabschnitt (168) eine obere Wand (506) umfasst, die ein Schnappelement (510) mit einschließt, das so eingerichtet ist, dass es in dem Abstand zwischen benachbarten Zahnelementen (512), die in dem Einstellbereich (148) angeordnet sind, aufgenommen wird und eine Schnappverschlussverriegelung bereitstellt, die eine vorübergehende Fixierung des Stoppers (502) erleichtert.

12. Stopper nach Anspruch 9, wobei der Befestigungsabschnitt (168) eine Vielzahl von ersten ausgerichteten Löchern (610) umfasst, die an den Seitenwänden (604a, 604b) angeordnet sind, um auf ein zweites, auf dem Einstellbereich (148) vorgesehenes Durchgangsloch (616) ausgerichtet zu sein, um es einem Befestigungselement (614) zu ermöglichen, durch die Löcher (610, 616) hindurchzugehen, um den Stopper (602) vorübergehend zu fixieren.

13. Stopper nach Anspruch 9, wobei der Stopper (154, 402, 502, 602) eine Verriegelungseinrichtung (176) aufweist, die eingerichtet ist, um den Stopper (154, 402, 502, 602) mit dem Einstellbereich zu verriegeln.

14. Stopper nach Anspruch 9, wobei der Stopper (154, 402, 502, 602) einen Griffabschnitt (408, 508, 608) umfasst, um den Stopper (154, 402, 502, 602) zu greifen und ihn über dem Einstellbereich anzuordnen.

## Revendications

1. Un dispositif d'épandage (100, 700, 800) comprenant:
un godet (102, 702, 802);
une unité de poignée (128) connectée au godet;
une paire de roues (118) attachées au godet, dans lequel la paire de roues est configurée pour déplacer le dispositif d'épandage;
une pluralité de trous (130, 706, 806) disposés au niveau d'une partie inférieure du godet; et
un mécanisme d'ajustement (132, 707, 807) pour contrôler une vitesse de décharge à travers des trous (130, 706, 806), le mécanisme d'ajustement (132, 707, 807) comprenant:
an élément d'ajustement (134, 708, 808) monté de manière coulissante sur le godet (102) et disposé sur les trous (130, 706, 806), dans lequel un mouvement de l'élément d'ajustement (134, 708, 808) est configuré pour faire varier de manière sélective un degré d'ouverture des trous (130, 706, 806) entre une position entièrement ouverte et une position entièrement fermée; et
une butée de fin de course (153, 716, 816) configurée pour créer un obstacle mécanique infranchissable (155, 407, 507, 607, 724, 824) pour limiter le mouvement de l'élément d'ajustement (134, 708, 808) vers la position entièrement ouverte des trous (130, 706, 806),
dans lequel le butée de fin de course (153) comprend un élément mécanique (157, 718, 818) configuré pour décaler une position de l'obstacle (155, 407,507, 607, 724, 824) pour restreindre de manière sélective le mouvement de l'élément d'ajustement (134, 708, 808) vers la position entièrement ouverte des trous (130,706, 806) et
dans lequel le dispositif d'épandage comprend en outre un levier (138) ayant une première extrémité (140) et une deuxième extrémité (142), dans lequel le levier (138) est couplé de manière pivotante au godet (102) entre la première extrémité et la deuxième extrémité de telle manière que, la deuxième extrémité est couplée à l'élément d'ajustement (134) et la première extrémité est configurée pour se déplacer le long d'une plage de réglage (148),
**caractérisé en ce que**
l'élément mécanique (157) est une pièce d'arrêt (154, 402, 502, 602) configurée pour être positionné de façon variable le long de la plage de réglage (148) pour limiter le mouvement de la première extrémité du levier (138),
dans lequel la plage de réglage (148) se prolonge entre une point de consigne entièrement fermé (152) et un point de consigne entièrement ouvert (150) et dans lequel la pièce d'arrêt (154, 402, 502,602) limite le mouvement de la première extrémité du levier (138) vers le point de consigne entièrement ouvert (150) et,
dans lequel la pièce d'arrêt (154, 402, 502, 602) comprend une partie de fixation (168) configurée pour fixer de manière amovible la pièce d'arrêt (154, 402, 502, 602) le long de la plage de réglage (148) entre le point de consigne entièrement fermé (152) et le point de consigne entièrement ouvert (150).

2. Le dispositif d'épandage selon la revendication 1, dans lequel la partie de fixation (168) comprend un profil denté (170) configuré pour fixer la pièce d'arrêt à la plage de réglage.

3. Le dispositif d'épandage selon la revendication 1, dans lequel la partie de fixation (168) comprend une paroi supérieure (506) comprenant un élément d'encliquetage (510) configuré pour être reçu dans l'espacement entre éléments de dents adjacents (512) arrangé à l'intérieur de la plage de réglage (148) fournissant un verrouillage par encliquetage pour faciliter une fixation temporaire de la pièce d'arrêt (502).

4. Le dispositif d'épandage selon la revendication 1, dans lequel la partie de fixation (168) comprend une pluralité de premiers trous alignés (610) disposés sur les parois latérales (604a, 604b) pour être alignés avec un deuxième trou traversant (616) prévu sur la plage de réglage (148) pour permettre à un élément de fixation (614) de passer à travers des trous (610, 616) pour fixer temporairement la pièce d'arrêt (602).

5. Le dispositif d'épandage selon la revendication 1 ou 2, dans lequel la pièce d'arrêt (154, 402, 502, 602) comprend un moyen de verrouillage (176) pour interagir avec la première extrémité du levier (138) pour maintenir le levier (138) dans en position intermédiaire entre le point de consigne entièrement fermé (152) et le point de consigne entièrement ouvert (150).

6. Le dispositif d'épandage selon la revendication 5, dans lequel le moyen de verrouillage (176) comprend une partie évidée (178).

7. Le dispositif d'épandage selon la revendication 6, dans lequel le levier (138) comprend une partie de nez (180) configurée pour coopérer avec la partie évidée (178) du moyen de verrouillage (176).

8. Le dispositif d'épandage selon la revendication 1, dans lequel le mécanisme d'ajustement (132) comprend en outre une pédale (156) connectée au levier (138), la pédale (156) est configurée pour déplacer de façon pivotante le levier (138).

9. Une pièce d'arrêt (154, 402, 502, 602) pour un dispositif d'épandage selon la revendication 1,
**caractérisée en ce que**
la pièce d'arrêt (154, 402, 502, 602) comprend une partie de fixation (168) configurée pour positionner de manière variable et fixer de manière amovible la pièce d'arrêt (154, 402, 502, 602) le long de la plage de réglage pour limiter le mouvement du levier, le pièce d'arrêt (154, 402, 502, 602) comprenant des marquages d'index pour aider à définir un point particulier dans la plage de réglage pour une vitesse désirée de décharge du matériau.

10. La pièce d'arrêt selon la revendication 9, dans laquelle la partie de fixation (168) comprend un profil denté (170) configuré pour fixer la pièce d'arrêt (154,402, 502, 602) à la plage de réglage.

11. La pièce d'arrêt selon la revendication 9, dans laquelle la partie de fixation (168) comprend une paroi supérieure (506) comprenant un élément d'encliquetage (510) configuré pour être reçu dans l'espacement entre éléments de dents adjacents (512) arrangé à l'intérieur de la plage de réglage (148) fournissant un verrouillage par encliquetage pour faciliter une fixation temporaire de la pièce d'arrêt (502).

12. La pièce d'arrêt selon la revendication 9, dans laquelle la partie de fixation (168) comprend une pluralité de premiers trous alignés (610) disposés sur les parois latérales (604a, 604b) pour être alignés avec un deuxième trou traversant (616) prévu sur la plage de réglage (148) pour permettre à un élément de fixation (614) de passer à travers des trous (610, 616) pour fixer temporairement la pièce d'arrêt (602).

13. La pièce d'arrêt selon la revendication 9, dans laquelle la pièce d'arrêt (154, 402, 502, 602) comprend un moyen de verrouillage (176) configuré pour verrouiller la pièce d'arrêt (154, 402, 502, 602) à la plage de réglage.

14. La pièce d'arrêt selon la revendication 9, dans laquelle la pièce d'arrêt (154, 402, 502, 602) comprend une poignée (408, 508, 608) pour saisir la pièce d'arrêt (154, 402, 502, 602) et la placer au-dessus de la plage de réglage.
